# FASCICULE DE BREVET EUROPEEN

(11) **EP 1 073 345 B1**
(45) Date de publication et mention de la délivrance du brevet: **24.10.2007**
(21) Numéro de dépôt: 99916948.5
(22) Date de dépôt: 19.04.1999
(51) Int. Cl.: A23L 1/305

(54) **COMPLEMENT PROTEIQUE, COMPOSITION ALIMENTAIRE LE CONTENANT, LEUR PROCEDE DE PREPARATION ET LEUR UTILISATION**
EIWEISSKOMPLEMENT, DIESELBEN ENTHALTENDE LEBENSMITTELZUBEREITUNG, VERFAHREN ZU IHRER HERSTELLUNG UND ANWENDUNG DERSELBEN
PROTEIN SUPPLEMENT, FOOD COMPOSITION CONTAINING SAME, PREPARATION METHOD AND USE

(30) Priorité: 23.04.1998 US 65174; 15.04.1999 FR 9904752
(43) Date de publication de la demande: 07.02.2001
(73) Titulaire: Pro Dietic RDP (S.A.R.L.), 60740 Saint-Maximin (FR)
(72) Inventeur: REGNAULT, Alain, F-60260 Lamorlaye (FR); PAUL, François, F-31400 Toulouse (FR)
(74) Mandataire: Warcoin, Jacques
(86) Numéro de dépôt international: PCT/FR1999/000919
(87) Numéro de publication internationale: WO 1999/055174

(56) Documents cités:
- EP-A- 0 022 696
- WO-A-87/01590
- WO-A-90/11696
- WO-A-91/10441

## Description

La présente invention est relative à un complément protéique pour la préparation de compositions alimentaires utiles pour augmenter le niveau de sérotonine cérébrale.

La sérotonine a pour précurseur un acide aminé neutre, le tryptophane. Le métabolisme de cet acide aminé a été étudié chez le rat (1-10) et chez l'homme (11-22). Ces travaux montrent que le transport du tryptophane (TRP) du sang vers le cerveau à travers la barrière hémato-encéphalique n'est pas directement lié à sa concentration plasmatique mais dépend du rapport molaire plasmatique entre le tryptophane et un certain nombre d'autres acides aminés neutres (AAN), en particulier l'isoleucine (ILE), la leucine (LEU), la méthionine (MET), la phénylalanine (PHE), la tyrosine (TYR) et la valine (VAL) (4). En effet, ces acides aminés utilisent le même système de transport pour le passage de la barrière hémato-encéphalique et sont donc en compétition pour pénétrer dans le cerveau. Durant les périodes de digestion des aliments, les concentrations plasmatiques de ces acides aminés peuvent varier de façon très importante et dépendent de la quantité et de la composition des aliments ingérés.

L'alimentation humaine usuelle dans les pays industrialisés est riche en protéines (protéines animales, en particulier) et induit en période postprandiale une diminution du ratio plasmatique molaire TRP/AAN en raison à la fois de la forte teneur en acides aminés compétiteurs du tryptophane dans les protéines d'origine animale et la relative faible teneur en tryptophane de ces mêmes protéines. La diminution de ce ratio est observée dès que l'aliment ingéré contient 5 % de protéines chez le rat (10) et chez l'homme (14).

Au contraire, une alimentation contenant peu ou pas de protéines et très riche en glucides assimilables tend à augmenter le ratio plasmatique TRP/AAN. En effet, la libération d'insuline plasmatique induite par l'absorption importante de glucose stimule le métabolisme cellulaire et la synthèse protéique. On observe alors un pompage des acides aminés compétiteurs du tryptophane du plasma par les cellules de l'organisme, ce qui provoque une augmentation du ratio TRP/AAN. Le tryptophane plasmatique est très peu affecté par ce mécanisme, d'une part parce que son métabolisme est essentiellement hépatique (la teneur moyenne en tryptophane des protéines musculaires est faible) et d'autre part parce qu'il est lié à 90 % à l'albumine plasmatique, contrairement aux autres acides aminés neutres qui circulent librement dans le plasma sanguin.

L'implication du système sérotoninergique cérébral et par conséquent du précurseur de la sérotonine, le tryptophane d'origine plasmatique, a été mise en évidence dans un certain nombre de fonctions essentielles telles que la régulation de l'humeur, de l'appétit, du sommeil, etc....

Il existe un certain nombre de dysfonctionnements de ce système sérotoninergique, résultant d'un déficit cérébral en sérotonine, que l'on peut qualifier de troubles physio-pathologiques tels que les troubles du comportement alimentaire (boulimie), les états dépressifs liés au stress, à l'anxiété, les dépressions saisonnières, les troubles du sommeil, l'irritabilité et l'agressivité, les syndromes prémenstruels, etc...(23-48). Dans ce dernier cas, une étude a montré que des femmes consommant pendant la phase prémenstruelle des acides aminés exempts de tryptophane subissaient une aggravation de leurs troubles. Une corrélation a pu être établie entre l'importance de ces troubles et la valeur du ratio TRP/AAN (48).

Il a été envisagé d'utiliser le tryptophane à des doses massives, de l'odre de plusieurs grammes par jour, pour le traitement de patients dépressifs (23). Mais, si ces doses massives permettent d'obtenir rapidement une concentration plasmatique importante de cet acide aminé, le retour à la valeur basale est également rapide, en raison de la stimulation du catabolisme hépatique du tryptophane, notamment par l'induction d'enzymes. L'effet du tryptophane, administré sous la forme d'acide aminé libre, est donc limité dans le temps. De plus, si le sujet suit par ailleurs un régime alimentaire riche en protéines (animales, en particulier) et pauvre en glucides assimilables, l'effet recherché par l'ingestion d'une grande quantité de tryptophane sera en grande partie détruit par l'absorption en grande quantité d'acides aminés compétiteurs du tryptophane.

Il a été envisagé, comme décrit dans la demande de brevet internationale PCT publiée sous le numéro WO 91/10441, d'utiliser des compositions contenant des polypeptides riches en tryptophane en association avec de l'arginine ou de l'ornithine sous forme libre ou peptidique. Les polypeptides préférés cités dans la demande de brevet internationale PCT WO 91/10441 sont ceux dont le ratio global entre le tryptophane et les autres acides aminés neutres est compris entre 0,065 et 0,2.

Le brevet US No.5 206 218 décrit une méthode destinée à réduire les fluctuations postprandiales plasmatiques des acides aminés neutres. A cette fin des compositions intégrant des glucides et des protéines dans un ratio de 4 pour 1 se révèlent être particulièrement efficaces.

Les compositions alimentaires décrites dans l'art antérieur ne sont pas satisfaisantes dans la mesure où elles ne sont pas applicables de manière satisfaisante au système sérotoninergique. De plus de telles compositions astreignent les sujets qui les ingèrent à suivre un régime très contraignant afin de stabiliser les effets d'un tel régime.

Le but de la présente invention est précisément de pallier les inconvénients ci-dessus en offrant des compositions alimentaires dont l'utilisation adéquate permet d'augmenter la concentration cérébrale de sérotonine chez des individus présentant un déficit de cette substance.

Ce but est atteint grâce à l'utilisation d'un fraction protéique pour la préparation d'une composition alimentaire utile pour augmenter le niveau de sérotonine cérébrale chez des sujets avantageusement soumis à un régime alimentaire stabilisant les effets d'une telle composition.

On entend par sérotonine, tant la sérotonine qu'une molécule synthétisée dans la région cérébrale dont le tryptophane est le précurseur, comme par exemple un précurseur ou un métabolite de la sérotonine.

La composition alimentaire selon l'invention permet de traiter les troubles physiopathologiques liés à un déficit du système sérotoninergique dans lequel le tryptophane joue le rôle de précurseur. On peut citer la boulimie, les troubles de l'humeur (instabilité, anxiété, irritabilité, stress, agressivité), les états dépressifs, les syndromes prémenstruels, les troubles du sommeil, etc...

Par ailleurs, les Inventeurs ont montré que l'on pouvait augmenter le ratio plasmatique molaire Trp/AAN chez des volontaires sains qui suivent un régime équilibré contenant environ 15% de protéines. Cette démonstration va à l'encontre des conclusions parues jusqu'àlors dans la littérature (49).

La fraction protéique entrant dans les composition alimentaires de l'invention comprend au moins 25 % et avantageusement 50% et tout préférentiellement 80% en poids de protéine dont le ratio Trp/AAN est compris entre 0,06 et 0,08. Un tel ratio assure un franchissement satisfaisant de la barrière hémato-encéphalique par le tryptophane plasmatique. La concentration de tryptophane cérébral est de ce fait augmentée induisant une biosynthèse accrue de sérotonine.

La fraction protéique selon l'invention est constituée:
- de protéines du lactosérum, dont le ratio Trp/AAN est compris entre environ 0,06 et environ 0,08.

Ces exemples de fractions protéiques peuvent être préparés par des méthodes connus de l'homme du métier comme par exemple les techniques séparatives telles que la précipitation sélective, la centrifugation, l'ultracentrifugation, la chromatographie, l'ultrafiltration....

Les compositions alimentaires selon l'invention sont constituée d'une fraction protéique, d'une fraction glucidique, d'une fraction minérale et/ou vitaminique, et d'une fraction lipidique, **caractérisée en ce que** ladite fraction protéique est constituée par des protéines de lactosérum dont le ratio Trp/AAn est compris entre 0,06 et 0,08.

La fraction protéique représente entre 10 et 60 % et de préférence entre 15 et 50 %, en poids de la composition alimentaire de l'invention.

La fraction glucidique, composée de glucides assimilables, représente entre 25 et 75 % et de préférence entre 30 et 60 %, en poids de la composition alimentaire de l'invention. Cette fraction glucidique peut comprendre des glucides simples comme le glucose, le fructose, le saccharose ou le lactose, des maltodextrines et des glucides complexes assimilables tels que des amidons. Parmi ceux-ci, on préfère tout particulièrement les sirops de glucose et les maltodextrines.

La fraction lipidique représente entre 2 et 25% et de préférence entre 5 et 20%, en poids de la composition alimentaire de l'invention. Cette fraction lipidique est constituée d'acides gras saturés, monoinsaturés ou polyinsaturés à chaine moyenne ou longue.

La fraction minérale comprend par exemple du calcium, du potassium, du sodium, du phosphore, du magnésium, du fer, du zinc, du manganèse, du cuivre, du sélénium ou de l'iode. Parmi ceux-ci, on préfère tout particulièrement le calcium et le magnésium.

La fraction vitaminique comprend par exemple les vitamines A, B1, B2, PP, B5, B6, C, E, B12, D, de la biotine, de l'acide folique. Parmi ceux-ci, on préfère tout particulièrement B6 et PP.

La composition alimentaire objet de l'invention se caractérise donc par ses apports protéiques qui sont constitués de protéines de lactoserum dont le ratio Trp/AAN est compris entre 0,06 et 0,08. Cette caractéristique est essentielle pour garantir un franchissement de la barrière hémato-encéphalique par le tryptophane et maintenir une concentration cérébrale élevée de tryptophane. Une telle concentration assure une synthèse élevée de sérotonine.

Les compositions alimentaires selon l'invention peuvent se présenter sous la forme de tout type de formulation alimentaire sèche ou liquide telle que des soupes déshydratées, des crèmes dessert aromatisées, du lait sans caséine, des barres chocolatées, des biscuits ect.... L'homme du métier connaît les méthodes permettant de préparer de telles compositions alimentaires à partir du complément protéique de l'invention. Parmi ces méthodes on peut citer le mélange par voie sèche ou humide, l'appertisation, l'extrusion, etc....

Afin d'assurer l'effet optimal de la fraction protéique de l'invention et des compositions alimentaires le contenant, les Inventeurs ont défini les régimes alimentaires auxquels devra être soumis le sujet pour ne pas modifier l'impact du complément protéique et des compositions alimentaires le contenant. On entend par régime alimentaire, la ration alimentaire quotidienne du sujet généralement répartie en trois repas, matin, midi et soir, auxquels s'ajoutent éventuellement deux collations en milieu de matinée et en milieu d'après-midi.

En effet, il est important que le sujet absorbant la composition alimentaire de l'invention ne modifie pas les propriétés de la fraction protéique par un régime trop inapproprié. Comme indiqué précédemment la concentration de tryptophane dans le cerveau n'est pas directement liée à sa concentration plasmatique mais dépend du ratio plasmatique du tryptophane par rapport aux autres acides aminés neutres. Ainsi, plus la teneur en protéines de l'aliment consommé augmente plus le ratio Trp/AAN diminue. Au contraire, la consommation d'aliments riches en glucides stimule le métabolisme des cellules de l'organisme et entraine une consommation des acides aminés essentiels nécessaires à la synthèse protéique. Cette baisse générale de la concentration plasmatique des acides aminés neutres, reste faible dans le cas du tryptophane et provoque l'augmentation du ratio plasmatique Trp/AAN (5).

La première caractéristique des régimes définis par les inventeurs est un ratio entre les glucides assimilables et les protéines totales absorbées supérieur à environ 4. En effet, la conséquence de la consommation d'aliments riches en glucides est la stimulation du métabolisme des cellules de l'organisme et donc la consommation des acides aminés essentiels nécessaires à la synthèse protéique. Cette baisse générale de la concentration plasmatique des acides aminés neutres, est faible dans le cas du tryptophane. Or, le ratio plasmatique Trp/AAN est stabilisé dans le temps lorsque le ratio des glucides assimilables sur les protéines est supérieur à 3 et de préférence supérieur à environ 4.

Une deuxième caractéristique des régimes alimentaires définis par les inventeurs est de ne pas faire diminuer le ratio Trp/AAN plasmatique induit par l'absorption de la composition alimentaire par le sujet. A cette fin, le régime alimentaire ne doit pas contenir de protéines étant à la foi riches en acides aminés neutres et ayant une teneur moyenne ou faible en tryptophane. Ce type de protéines présente l'inconvénient de provoquer un afflux important d'acides aminés compétiteurs du tryptophane. Ainsi les produits à éviter sont par exemple le lait de vache ou tout autre produit laitier contenant de la caséine. Pour les mêmes raisons les protéines d'origine animale ne doivent entrer dans la composition du régime que de manière très limitée. C'est pourquoi le régime alimentaire auquel est associée la composition selon l'invention sera constitué essentiellement de protéines végétales, à l'exception des plantes de la famille du maïs qui ont de faibles teneurs en tryptophane.

Une troisième caractéristique des régimes alimentaires définis par les inventeurs est que la composition alimentaire de l'invention représente au moins environ les deux tiers de l'apport protéique total des repas. De manière préférentielle la fraction protéique de la composition alimentaire apporte entre environ 60 et 80% en poids des protéines totales du régime. En conséquence, les protéines apportées par le régime alimentaire, autres que celles apportées par la composition alimentaire de l'invention, représentent le tiers de la ration protéique totale. Ces protéines sont apportées par les aliments, comme les légumes, les féculents, le pain, les fruits etc....

L'action conjuguée de la fraction protéique de la composition alimentaire objet de la présente invention et du régime alimentaire auquel cette composition est associée assure la stabilisation d'une concentration cérébrale élevée en tryptophane et permet ainsi l'accroissement de la biosynthèse de sérotonine. Elle remédie en cela aux troubles physio-pathologiques causés par un manque de sérotonine.

Une telle composition trouve donc son intérêt dans le traitement des troubles physiopathologiques liés à un déficit du système sérotoninergique dans lequel le tryptophane joue le rôle de précurseur.

Parmi ces pathologies on peut citer, la boulimie, l'instabilité, l'anxiété, les états dépressifs, les syndromes prémenstruels, etc ... et les troubles et comportements associés comme les troubles de l'humeur ou du sommeil, etc...

L'invention se rapporte aussi à l'utilisation d'une composition alimentaire définie prècédemment pour la preparation d'un produit diététique destiné à augmenter le niveau de sérotonine cérébrale, chez un individu présentant un déficit en cette substance. Selon une forme de mise en oeuvre préférée, la composition est absorbée par un sujet qui est simultanément soumis à un régime alimentaire tel que défini précédemment.

L' invention concerne l'utilisation d'une composition alimentaire selon l'une quelconque des revendications 1 ou 2, pour la préparation d'un produit diététique destiné à augmenter le rapport Trp/AAN plasmatique chez un individu présentant un déficit en sérotonine cérébrale..

L'invention concerne l'utilisation d'une composition alimentaire selon l'une quelconque des revendications 1 ou 2, pour la préparation d'un produit diététique destiné au traitement de la boulimie, de l'instabilité, de l'anxiété, des états dépressifs, des syndromes prémenstruels, de l'irritabilité et des troubles du sommeil..

D'autres caractéristiques et avantages de l'invention apparaîtront dans la description qui suit et qui se réfère à des exemples de fractions protéiques et de compositions alimentaires les contenant ainsi qu'à leur préparation et à des régimes alimentaires particulièrement adaptés.

### Exemple 1.

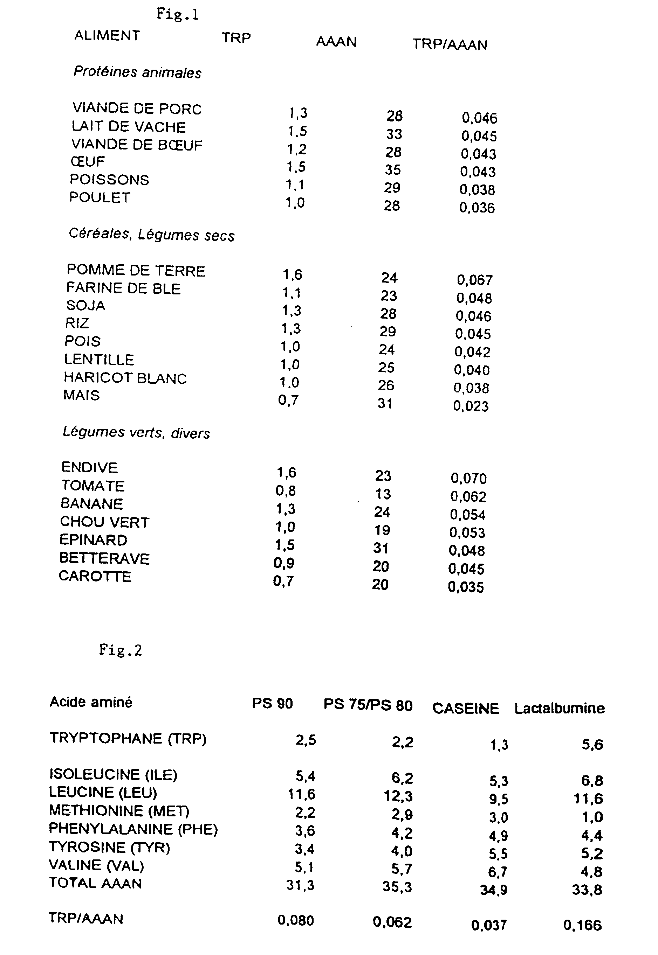

Le tableau de la figure 1 en annexe montre le ratio Trp/AAN de certains aliments usuels. On relève que le ratio Trp/AAN est généralement significativement inférieur à 0,06.

### Exemple 2.

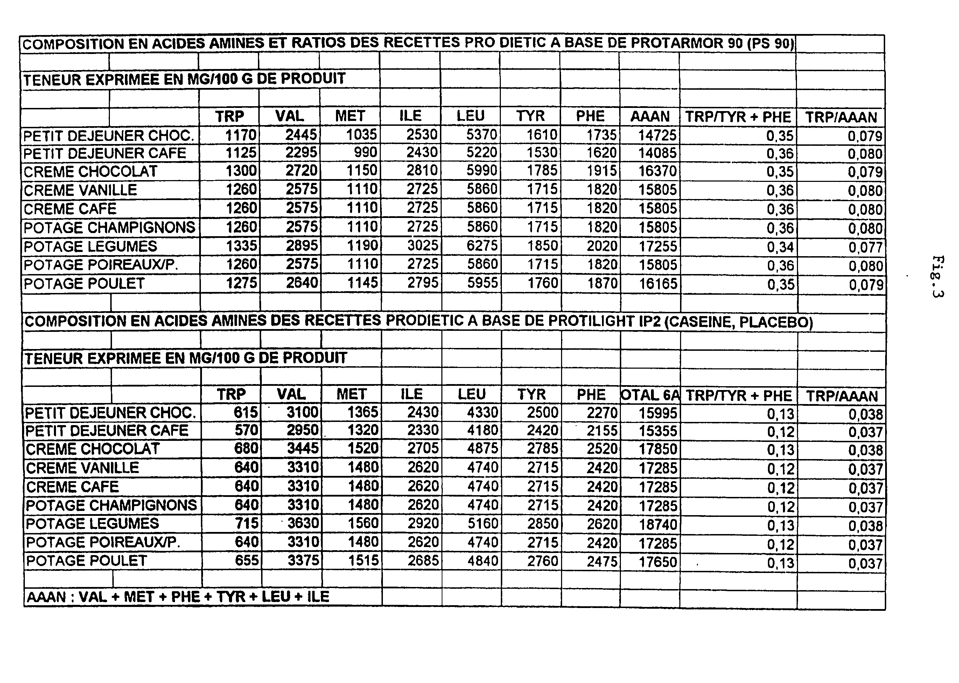

Le tableau de la figure 2 en annexe montre la composition en acides aminés ainsi que le ratio Trp/AAN de compléments protéiques selon l'invention et les compare à la composition et au ratio de la caséine. Les valeurs concernant la caséine sont données à titre de comparaison et sont représentatives d'un alimentation habituelle riche en protéines animales. Les compléments protéiques PS 90 et PS 75/80 proviennent de la société Armor Protéines.

Les ratios Trp/AAN mesurés sont supérieurs à 0,06 dans les compléments protéiques selon l'invention.

### Exemple 3.

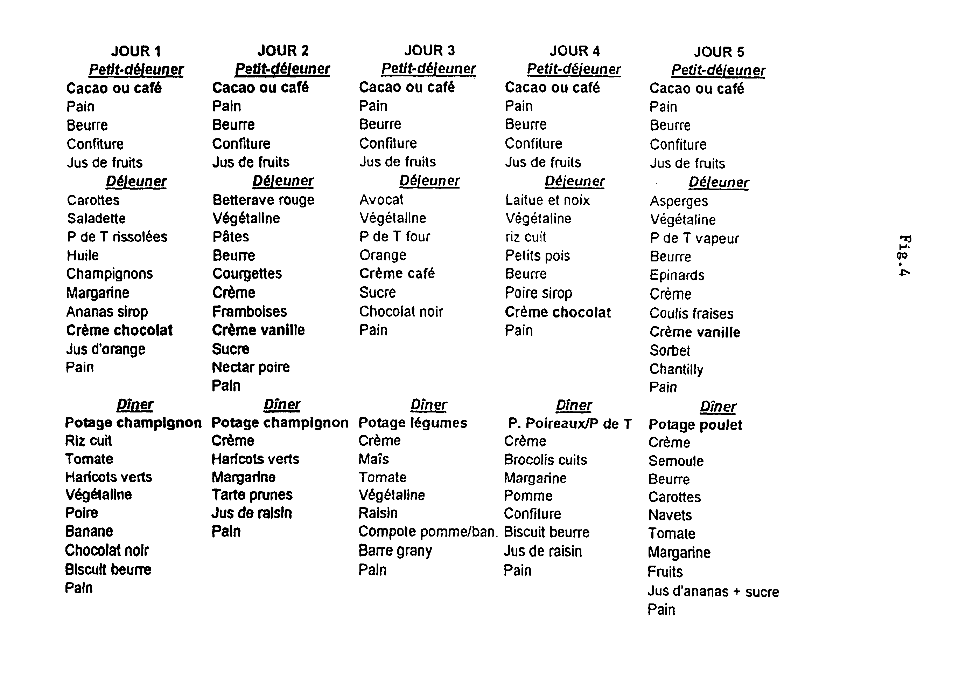

Le tableau de la figure 3 en annexe montre la composition en acides aminés ainsi que le ratio Trp/AAN de compositions alimentaires selon l'invention et les compare à la composition et au ratio de compositions à base de caséine. Les ratios Trp/AAN mesurés dans les compositions alimentaires de l'invention sont supérieurs à 0,06.

### Exemple 4.

Le tableau de la figure 4 en annexe donne un exemple de régime alimentaire de 5 jours incorporant des compositions alimentaires de l'invention dans lequel le ratio entre les glucides assimilables et les protéines totales absorbées est supérieur à environ 4.

Les compositions alimentaires de l'invention apparaissent en gras.

### Exemple 5

Une composition alimentaire de l'invention consommée pour la petit déjeuner comporte les éléments suivants:

**NOM DU PRODUIT : petit déjeuner café.**

| COMPOSITION en % : | | |
|---|---|---|
| humidité : | | 2,9 |
| protéines : | | 45.8 |
| lipides : | | 8,6 |
| glucides | totaux : | 41,3 |
| | fibres : | 4,2 |
| minéraux : | | 1,5 |
| total : | | 100,0 |
| | | |
| VALEUR CALORIQUE : 426 Kcal 1770 KJ | | |
| | | |

| FRACTION MINÉRALE en mg/100g: | | |
|---|---|---|
| calcium : | | 234,2 |
| potassium : | | 340,9 |
| sodium : | | 78,2 |
| phosphore : | | 100,0 |
| magnésium : | | 41,6 |
| fer. : | | 0,2 |
| | | |

| FRACTION PROTÉIQUE en % : | | |
|---|---|---|
| origine laitière : | | 45,2 |
| origine végétale : | | 0,6 |
| | | |

| FRACTION LIPIDIQUE en % : | | |
|---|---|---|
| acide linoléique : | | 3,40 |
| saturés : | | 1.85 |
| mono insaturés : | | 1,92 |
| poly insaturés : | | 3,00 |
| | | |
| FRACTION GLUCIDIQUE en % : | | |
| glucides assimilables | | 36,7 |
| glucides simples : | | 35,3 |
| dont fructose : | | 34,6 |
| dont lactose : | | 0,5 |
| matodextrines/amidon : | | 1,4 |
| autres glucides complexes : | | 0,5 |
| | | |
| FIBRES SOLUBLES en % : | | 0,5 |

### Exemple 6.

Une composition alimentaire de l'invention utilisable en tant que crème dessert à la vanille comporte les éléments suivants :

**NOM DU PRODUIT : crème vanille.**

| COMPOSITION en % : | | |
|---|---|---|
| humidité : | | 4,6 |
| protéines : | | 50,6 |
| lipides : | | 6,2 |
| glucides | totaux : | 37,4 |
| | fibres : | 4,0 |
| minéraux : | | 1,2 |
| total : | | 100,0 |
| | | |
| VALEUR CHLORIQUE : 406 Kcal 1704 KJ | | |
| | | |

| FRACTION MINÉRALE en mg/100g: | | |
|---|---|---|
| calcium : | | 252,0 |
| potassium : | | 112,0 |
| sodium : | | 84,0 |
| phosphore : | | 112,0 |
| magnésium : | | 22,4 |
| fer : | | 0,0 |
| | | |

| FRACTION PROTÉIQUE en % : | | |
|---|---|---|
| origine laitière : | | 60,6 |
| origine végétale : | | 0.0 |
| | | |

| FRACTION LIPIDIQUE en % : | | |
|---|---|---|
| acide linoléique : | | 0,00 |
| saturés : | | 0,95 |
| mono insaturés : | | 0,45 |
| poly insaturés : | | 0,00 |
| | | |

| FRACTION GLUCIDIQUE en % : | | |
|---|---|---|
| glucides assimilables | | 28,3 |
| glucides simples : | | 28,3 |
| | dont saccharose : | 27,7 |
| | dont lactose : | 0,0 |
| matodextrines/amidon : | | 0,0 |
| autres glucides complexes : | | 5,2 |
| | | |
| FIBRES SOLUBLES en % : | | 3,6 |

### Exemple 7

Une composition alimentaire de l'invention utilisable pour la préparation d'un potage est préparée de la manière suivant :

**NOM DU PRODUIT : soupe de légumes.**

| COMPOSITION en % : | | |
|---|---|---|
| humidité : | | 4,8 |
| protéines : | | 66,3 |
| lipides : | | 6,6 |
| glucides totaux : | | 23, 5 |
| | fibres : | 6,6 |
| minéraux : | | 8,9 |
| total : | | 100,0 |
| | | |
| VALEUR CALORIQUE : 376 Kcal 1681 KJ | | |
| | | |

| FRACTION MINÉRALE en mg/100g: | | |
|---|---|---|
| calcium : | | 340,4 |
| potassium : | | 573,2 |
| sodium : | | 2523,2 |
| phosphore : | | 202,0 |
| magnésium : | | 43,4 |
| fer : | | 0,0 |
| | | |

| FRACTION PROTÉIQUE en % : | | |
|---|---|---|
| origine laitière : | | 60,5 |
| origine végétale : | | 6,0 |
| | | |

| FRACTION LIPIDIQUE en % : | | |
|---|---|---|
| acide linoléique : | | 0,00 |
| saturés : | | 0,95 |
| mono insaturés : | | 0,45 |
| poly insaturés : | | 0,00 |
| | | |

| FRACTION GLUCIDIQUE en % : | | |
|---|---|---|
| glucides assimilables | | 10,2 |
| glucides simples : | | 0,6 |
| | dont saccharose : | 0,0 |
| | dont lactose : | 0,0 |
| matodextrines/amidon : | | 6,6 |
| autres glucides complexes : | | 10,7 |
| | | |
| FIBRES SOLUBLES en % : | | 2,7 |

### Exemple 8.

Composition (en %) d'une poudre permettant d'obtenir un lait sans caséine.
Humidité : 5
Matière grasse végétale : 15-17,5
Matières protéiques : 24-27 (béta-lactoglobuline : 14
alpha-lactalbumine : 4)
Sucres assimilables : 47-53 (lactose : 39,
maltodextrines : 10)
Cendres : 5-7

### Exemple 9.

L'exemple 9 concerne une barre diététique selon l'invention aromatisée au chocolat. Les proportions de chaque composant respectent les critères d'un régime selon l'invention.

La barre se compose des ingrédients suivants : sirop de glucose, chocolat à 70 % de cacao, protéines de lait (Pro Diétic 325/90), maltodextrines, sucre, cacao maigre, sucre inverti, stabilisant : sorbitol, arômes, sels minéraux : magnésium à 20 % (Pro Diétic 325/91), correcteur d'acidité : acide citrique.

L'analyse moyenne pour 100g de la barre chocolatée selon l'invention donne les résultats suivants (en %):

| | |
|---|---|
| ENERGIE | 394 kcal |
| Humidité | 10 |
| PROTIDES | 13,8 |
| LIPIDES | 11,4 |
| GLUCIDES assimilables | 60,2 |
| polyols | 2,8 |
| mono et disaccharidiques | 24,0 |
| polysaccharides | 33,4 |
| FIBRES | 1,0 |
| Calcium | 73 mg |
| Phosphore | 267 mg |
| Magnésium | 276 mg |
| Potassium | 334 mg |
| Fer | 1,7 mg |
| Zinc | 1,5 mg |
| Sodium | 100 mg |

La barre est conditionnée par unité de 35 à 50 grammes enveloppée sous film plastique et peut se conserver de 9 à 12 mois.

### Exemple 10.

L'exemple 10 est relatif à l'étude de l'effet d'une supplémentation en protéines du lactosérum sur le rapport Trp/AAN chez des volontaires sains de sexe féminin. Le régime alimentaire, basé sur les menus du tableau IV, est optimisé et répond aux critères définis dans la présente invention en ce qui concerne le ratio Trp/AAN des protéines et le ratio glucides assimilables/protéines.

En période postprandiale, entre 1 heure et 3 heures après le début des repas, une stabilisation ou une augmentation du ratio plasmatique est observée. A t2h, l'augmentation moyenne du ratio Trp/AAN est de 15%. Ce résultat est nouveau et va à l'encontre des travaux scientifiques publiés à ce jour (49) qui montrent que les ratios plasmatiques Trp/AAN diminuent toujours en période post-prandiale dès que le repas ingéré contient plus de 5 % de protéines.

Le tableau 1 ci-dessous rapporte l'évolution comparée du ratio plasmatique molaire Trp/AAN postprandial entre un régime alimentaire optimisé selon l'invention (régime PS 90) et un régime placebo (régime caséine) (moyenne de 10 volontaires).

**Tableau 1**

| RÉGIME CASEINE | | | | RÉGIME PS 90 | | | |
|---|---|---|---|---|---|---|---|
| T0 | T1H | T2H | T3H | T0 | T1H | T2H | T3H |
| 0,1154 | 0,1020 | 0,0927 | 0,0944 | 0,1196 | 0,1162 | 0,1214 | 0,1355 |

Le tableau 1 montre que l'écart grandit entre les valeurs du ratio plasmatique Trp/AAN au fur et à mesure de la digestion du repas. Trois heures après l'ingestion du repas la différence des ratios entre le régime optimisé selon l'invention et le régime placebo est d'environ 45 %. Le régime optimisé de l'invention favorise donc l'entrée du tryptophane dans le cerveau.

Le résultat ci-dessus a pu être obtenu en utilisant une fraction protéique ayant un ratio Trp/AAN élevé et un ratio glucides assimilabes/protéines moyen de 4.

L'essai a été réalisé en double aveugle avec la caséine comme placebo. La caséine a été choisie car elle représente bien la composition moyenne en acides aminés des protéines animales consommées en France. Quand la caséine est utilisée dans les régimes alimentaires de l'essai, une baisse significative de 18 % du ratio plasmatique Trp/AAN est observée.

Ces résultats ont été obtenus en suivant un régime alimentaire parfaitement équilibré sur le plan nutritionnel et très proche de celui recommandé par les nutritionnistes en particulier en ce qui concerne les proportions en glucides assimilables, en protéines animales et végétales, en lipides et en fibres. L'illustration en est donnée dans le tableau 2 ci-dessous.

Le tableau 2 est une comparaison des apports alimentaires entre un régime équilibré et un régime optimisé (régime Caséine) selon la présente invention (régime PS 90).

**Tableau 2**

| RÉGIME CASEINE | | | | | |
|---|---|---|---|---|---|
| Calories kcal/kg/j | Protéines g/kg/j | Trp mg/j | Trp/AAN | Glucides % cal | Lipides % cal |
| 34,8 | 1,16 | 797,5 | 0,039 | 57,1 | 29,5 |
| | | | | | |

| RÉGIME PS 90 | | | | | |
|---|---|---|---|---|---|
| Calories kcal/kg/j | Protéines g/kg/j | Trp mg/j | Trp/AAN | Glucides % cal | Lipides % cal |
| 35,1 | 1,17 | 1288,3 | 0, 068 | 56,8 | 29,8 |

### Exemple 11.

Cet exemple concerne l'effet d'une modification de la composition de la fraction protéique de l'alimentation sur l'amélioration du syndrome prémenstruel (SPM).

### 1) Principe.

On a montré, dans l'exemple 10, au moyen de dosage des taux d'acides aminés circulant dans le plasma sanguin qu'un certain mode d'alimentation protéique minimisant l'apport protéique sous forme de protéines animales et de caséinates et favorisant l'apport de fractions riches en TRP, comme l'alpha-lactalbumine, protéine sérique du lait de vache, permettait d'élever la concentration de TRP circulant et plus particulièrement le ratio des concentrations TRP/AAN.

Cette élévation du taux de TRP sanguin est recherchée pour favoriser la sécrétion de sérotonine cérébrale lorsque celle-ci est trop basse comme cela est le cas dans un certain nombre d'états physiopathologiques tels que le syndrome prémenstruel.

### 2) Les volontaires.

L'exemple 11 concerne un essai réalisé sur dix sept (17) femmes souffrant d'un syndrome prémenstruel significatif, sélectionnées selon les critères rapportés ci-dessous et qui ont accepté de modifier leur mode d'alimentation courant pour adopter un autre mode d'alimentation appelé APM pendant 10 jours de leur cycle menstruel et pendant trois cycles menstruels consécutifs. Cette période de 10 jours commençait le septième jour avant la date présumée des règles.

### Critères d'inclusion :

- Patiente présentant un syndrome prémenstruel net (symptômes : sensation de gonflement, oedèmes / sensation de prise de poids / asthénie,fatigue, manque d'entrain / sautes d'humeurs / pulsions boulimiques, désir sucré / troubles du sommeil / digestions difficiles).
- Patiente ayant des cycles menstruels réguliers (maximum 2 ou 3 jours de décalages entre les cycles).
- Durée minimale du cycle : 25 jours, et maximale : 31 jours.
- Patiente ne suivant pas de traitement médical, ou suivant un traitement n'interférant pas avec le test.
- Patiente n'ayant pas recours à la contraception orale si possible.

### Critères d'exclusion :

- Accouchement depuis moins de 6 mois.
- Patiente ayant changé de mode de contraception au cours des 6 derniers mois.
- Allaitement.
- Patiente suivant un régime alimentaire particulier.
- Tout état physiologique, ou pathologique non compatible avec le suivi d'un régime alimentaire particulier (phénylcétonurie par exemple).
- Allergie aux protéines de lait.

Dix sept (17) volontaires ont suivi ce régime sans écart alimentaire notable pendant trois périodes de 10 jours et pendant trois cycles menstruels consécutifs.

Parmi ces femmes :
- quatorze (14) femmes n'utilisaient aucun mode de contraception, une (1) femme utilisait la contraception orale et deux (2) femmes, le stérilet.
- douze (12) femmes étaient âgées de moins de 45 ans et 5 femmes avaient un âge supérieur ou égal à 45 ans. La plus jeune recrutée avait 24 ans et la plus âgée 51 ans.
- quatorze (14) femmes avaient un indice de masse corporelle (IMC) inférieur à 25 (valeur inférieure 18,0 et supérieure 23,3). Deux (2) femmes avaient un IMC compris entre 25 et 30 et une (1) femme avait un IMC supérieur à 30.

### 3) Le mode d'alimentation APM (alimentation protéique modulée).

Le mode d'alimentation adopté pendant cette période est similaire au régime PS90 de l'exemple 10 et se caractérise essentiellement par une modification significative de la composition en acides aminés de la fraction protéique absorbée, cet objectif étant atteint par la combinaison :
- de la consommation préférentielle des aliments autorisés du tableau 3 ci-dessous.

**Tableau 3**

| | |
|---|---|
| - Tous les légumes, cuits ou crus. - Toutes les céréales : riz, blé, orge, millet, sarrasin, quinoa, boulghour, etc. - Les céréales du petit déjeuner ne contenant pas de lait : flocons d'avoine, corn-flakes (mais pas les Spéciales K® ni les Rice Krispies®, etc.) - Toutes les légumineuses : lentilles, haricots, pois chiches, etc. - Le pain, les biscottes sans oeufs. - Toutes les viennoiseries sans lait ni oeufs (pas de brioche ni de pain brioché ou viennois). | - Toutes les matières grasses : beurre, huiles, margarines, etc. - Tous les fruits : frais, secs, oléagineux. - Tous les dérivés du soja : lait, yaourt, tofu, etc. - Le sucre et tous les aliments sucrés : miel, chocolat noir, confiture, crème de marrons, etc. - Les boissons sucrée : sodas, sirop, etc. - Les sorbets aux fruits (sans lait). |

- de l'exclusion des aliments interdits du tableau 4 ci-dessous.

**Tableau 4**

| Toutes les protéines animales | Tous **les laitages et leurs dérivés** |
|---|---|
| - Viandes, volailles, poissons, oeufs et tous leurs dérivés : charcuteries, jambon, gélatine et gelée, crustacés, fruits de mer, surimi, oeufs de poisson. - Les plats contenant des oeufs : meringues, pâtisseries et crèmes à base de blanc ou de jaune d'oeufs (mousses, crêpes, madeleines, etc.). - Les flans salés ou sucrés. | - Yaourts, fromages blancs, petits suisses, etc.... - Fromages de toutes sortes, les plats gratinés. - Le lait et tous les aliments en contenant (chocolat au lait, pain au lait, etc.). - La crème chantilly. - Toutes les préparations contenant du lait : pâtisseries, crèmes desserts, quiches. - Les crèmes glacées à base de lait, de yaourts ou d'oeufs. |

- de la prise régulière au cours de la journée de compléments protéinés riches en alpha-lactalbumine du type rapportés dans le tableau 5 ci-dessous.

**Tableau 5**

| | Poids en g | Protéines % | Lipides % | Glucides % | TRP/AAN |
|---|---|---|---|---|---|
| Préparation déshydratée pour entremet | 35 | 47,1 | 7,7 | 36,4 | 0,08 |
| Préparation déshydratée pour potage | 35 | 48,1 | 7,0 | 31,2 | 0,08 |
| Barre protéinée | 35 | 20,4 | 9,8 | 57,9 | 0,08 |

L'objectif de ce mode d'alimentation est d'élever le ratio TRP/AAN de la fraction protéique moyenne consommée au cours de la journée de 4 % à 7-8 %.

Les aliments interdits du tableau 4 se caractérisent par une teneur élevée en protéines et un ratio TRP/AAN de l'ordre de 4 %.

Les aliments autorisés du tableau 3 se caractérisent par une teneur en protéines faible (de l'ordre de 10 à 15 %), par une teneur en glucides élevée et par une teneur variable en lipides.

Les compléments protéiques sont destinés à pallier au déficit de protéines résultant de l'exclusion de la majeure partie des protéines d'origine animale. Ces compléments se caractérisent par une teneur élevée en protéines (20 à 50 %), et pour la fraction protéique proprement dite par un rapport TRP/AAN d'environ 8 %. Les principales caractéristiques de ces compléments se retrouvent dans le tableau 5.

Aucun conseil de restriction calorique n'est donné, les volontaires pouvant consommer sans restriction les aliments autorisés du tableau 3, la seule contrainte consistant à exclure la consommation d'aliments du tableau 4 et à consommer cinq compléments protéiques tels que définis dans le tableau 5 selon l'ordre donné dans l'organisation journalière de la prise des compléments protéiques APM) suivante :
Petit déjeuner : 7-8 heures : 1 préparation pour entremet + aliments autorisés.
En cas : 10 heures : 1 barre.
Déjeuner : 12-13 heures : 1 préparation pour entremet + aliments autorisés.
Dîner : 19-20 heures : 1 préparation pour potage + aliments autorisés.

### 4) Conduite de l'essai.

L'objectif de l'essai était de faire apprécier et quantifier par les volontaires lors d'un entretien avec leur médecin, avant le régime puis après chaque période de 10 jours de régime APM, le souvenir de 15 symptômes douloureux ou déplaisants liés au syndrome prémenstruel. Ces symptômes sont rapportés dans les tableaux 6 et 7 ci-dessous où sont indiquées respectivement les valeurs médianes et les valeurs moyennes arithmétiques des intensités des symptômes prémenstruels sans et avec régime APM. Ces valeurs ont été calculées à partir des notes attribuées par les 17 volontaires aux différents symptômes.

**Tableau 6 : Valeurs médianes**

| **N°** | **Symptômes liés au syndrome prémenstruels** | **Sans régime APM** | **Avec régime APM** | **Différence** |
|---|---|---|---|---|
| 1 | Sautes d'humeurs | 3,7 | 1,3 | 2,4 |
| 2 | Troubles du sommeil | 3,2 | 1,7 | 1,5 |
| 3 | Sentiments de dépression | 2,9 | 1,7 | 1,2 |
| 4 | Pulsions boulimiques, désir sucré | 3,2 | 1,3 | 1,9 |
| 5 | Asthénie, fatigue, manque d'entrain | 4,5 | 1,6 | 2,9 |
| 6 | Sensation de prise de poids | 4,2 | 0,3 | 3,9 |
| 7 | Sensation de gonflement, oedèmes | 4,3 | 1,0 | 3,3 |
| 8 | Migraines, céphalées | 3,3 | 0,7 | 2,6 |
| 9 | Troubles intestinaux | 3,8 | 1,9 | 1,9 |
| 10 | Digestions difficiles | 4,0 | 0,7 | 3,3 |
| 11 | Diminution de la libido | 1,3 | 0,8 | 0,5 |
| 12 | Jambes lourdes | 2,6 | 1,1 | 1,4 |
| 13 | Sentiment de confusion | 0,4 | 0,2 | 0,2 |
| 14 | Trouble de la mémoire | 1.5 | 0,9 | 0,6 |
| 15 | Difficulté à se concentrer | 2,3 | 0,6 | 1,7 |

**Tableau 7 : Moyennes arithmétiques**

| N° | Symptômes liés au SPM | Sans régime APM (moyenne) | Avec régime APM (moyenne) | Différence |
|---|---|---|---|---|
| 1 | Sautes d'humeurs | 3, 8 | 1,7 | 2,1 |
| 2 | Troubles du sommeil | 3,4 | 1,9 | 1,5 |
| 3 | Sentiments de dépression | 3,0 | 1,7 | 1,3 |
| 4 | Pulsions boulimiques, désir sucré | 3,7 | 1,3 | 2,4 |
| 5 | Asthénie, fatigue, manque d'entrain | 4,4 | 1,9 | 2,5 |
| 6 | Sensation de prise de poids | 4,1 | 0,8 | 3,3 |
| 7 | Sensation de gonflement, oedèmes | 4,6 | 1,6 | 3,0 |
| 8 | Migraines, céphalées | 3,6 | 1,8 | 1,8 |
| 9 | Troubles intestinaux | 3,8 | 2,5 | 1,3 |
| 10 | Digestions difficiles | 4,1 | 1,8 | 2,3 |
| 11 | Diminution de la libido | 2,4 | 1,3 | 1,1 |
| 12 | Jambes lourdes | 3,1 | 1,0 | 2,1 |
| 13 | Sentiment de confusion | 1,6 | 0,8 | 0,8 |
| 14 | Trouble de la mémoire | 2,3 | 1,3 | 1,0 |
| 15 | Difficulté à se concentrer | 2,9 | 1,5 | 1,4 |

Cette appréciation a été réalisée à l'aide d'un questionnaire de type « qualité de vie » qui énumère quinze symptômes du syndrome prémenstruel, chaque femme précisant l'intensité de ses propres symptômes par une note allant de 0 (symptôme absent) à 6 (intensité maximale). Ce questionnaire est complété à quatre reprises : une première fois au moment de l'inclusion (questionnaire Q0) afin d'estimer l'intensité habituelle des symptômes, et les autres fois (questionnaires Q1, Q2, Q3) après chaque cure de 10 jours et ce concernant donc le cycle qui vient de se terminer.

En plus, des précisions sont demandées sur les écarts alimentaires qui ont pu être faits pendant ces 10 jours de régime APM, sur les événements majeurs intervenus entre 2 cycles et pouvant avoir une répercussion sur le SPM, sur l'impression générale de l'effet du régime et sur les difficultés à suivre le régime APM.

### 5) Résultats.

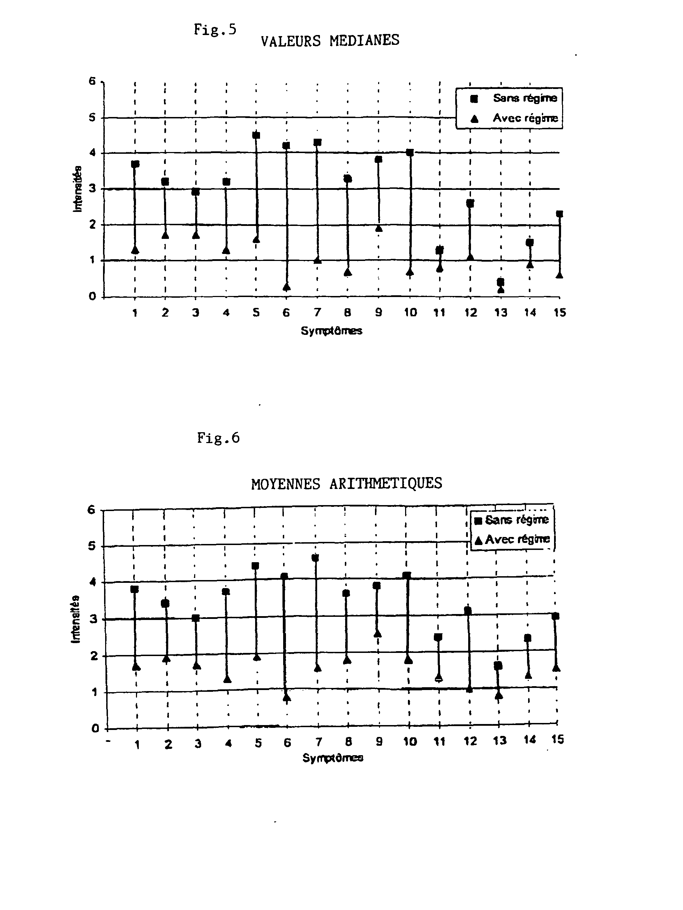

Dans les tableaux 6 et 7 et dans les graphiques des figures 5 et 6 en annexe, les résultats sont exprimés en valeurs médianes et en valeurs moyennes arithmétiques des intensités des symptômes calculées à partir des notes attribuées par les dix sept (17) volontaires. Les valeurs des tableaux 6 et 7 montrent une amélioration nette de l'intensité de chaque symptôme lorsque les volontaires ont suivi le régime APM. Cette amélioration est d'autant plus élevée que l'intensité du symptôme était plus importante avant le régime. Les plus fortes améliorations concernent les symptômes suivants :
- sensation de prise de poids,
- sensation de gonflement, oedèmes,
- digestions difficiles,
- asthénie, fatigue, manque d'entrain,
- sautes d'humeurs,
- pulsions boulimiques, désir sucré.

Les trois symptômes les moins sensibles à ce régime sont les suivants :
- sentiment de confusion,
- diminution de la libido,
- trouble de la mémoire.

### RÉFÉRENCES BIBLIOGRAPHIOUES

1 - FERNSTROM J.D., FALLER D.V. (1978). Neutral amino acids in the brain : changes in response to food ingestion. J. Neurochem. 30, 1531-1538.
2 - SMITH S.A., CARR F.P.A., POGSON C.I. (1980). The metabolism of L-tryptophan by isolated rat liver cells. Quantification of the relative importance of, and the effect of nutritional status on the individual pathways of tryptophan metabolism. J. Biochem. 192, 673-686.
3 - GLAESER B.S., MAHER T. J., WURTMAN R.J. (1983). Changes in brain levels of acidic, basic, and neutral amino acids after consumption of single meals containing various proportions of protein. J. Neurochem. 41, 1016-1021.
4 - ASHLEY D.V.M. (1985). Factors affecting the selection of protein and carbohydrate from a dietary choice. Nutr. Res. 5, 555-571.
5 - YOKOGOSHI H., WURTMAN R.J. (1986). Meal composition and plasma amino acid ratios : effect of various proteins or carbohydrates, and of various protein concentrations. Metabolism 35 (9), 837-842.
6 - FERNSTROM J.D., FERNSTROM M.H., GRUBB P.E. (1987). Twenty-four hour variations in rat blood and brain levels of the aromatic and branched-chain amino acids : chronic effects of dietary protein content. Metabolism 36 (7), 643-650.
7 - ERIKSSON T., WIESEL K., VOOG L., HAGMAN M. (1989). Diurnal rhythms in rat plasma amino acids. Life Sci. 45 (11), 979-986.
8 - SALTER M., KNOWLES R.G., POGSON C. I. (1989). How does displacement of albumin-bound tryptophan cause sustained increases in the free tryptophan concentration in plasma and 5-hydroxytryptamine synthesis in brain ? Biochem. J. 262, 365-368.
9 - FERNSTROM J.D. (1990). Aromatic amino acids and monoamine synthesis in the central nervous system : influence of the diet. J. Nutr. Biochem. 1, 508-517.
10 - FERNSTROM M.H., FERNSTROM J.D. (1995). Brain tryptophan concentrations and serotonin synthesis remain responsive to food consumption after the ingestion of sequential meals. Am. J. Clin. Nutr. 61, 312-319
11 - FERNSTROM J.D., WURTMAN R.J., HAMMARSTROM-WIKLUND B., RAND W. M., MUNRO H.N., DAVIDSON C.S. (1979). Diurnal variations in plasma concentrations of tryptophan, tyrosine, and other neutral amino acids : effect of dietary protein intake. Am. J. Clin. Nutr. 32, 1912-1922.
12 - YOUNG S. Y., GAUTHIER S. (1981). Tryptophan availability and control of 5-hydroxytryptamine and tryptamine synthesis in human CNS. Adv. Exp. Med. Biol. 133, 221-230.
13 - ASHLEY D.V.M., LIARDON R., LEATHWOOD P.D. (1985). Breakfast meal composition influences plasma tryptophan to large neutral amino acid ratios of healthy lean youg men. J. Neural Transm. 63, 271-283.
14 - TEFF K.L., YOUNG S.N., BLUNDELL J.E. (1989). The effect of protein or carbohydrate breakasts on subsequent plasma amino-acid levels, satiety and nutrient selection in normal males. Pharmacol. Biochem. Behav. 34, 829.
15 - DELGADO P.L., CHARNEY D.S., PRICE L.H., LANDIS H., HENINGER G.R. (1989). Neuroendocrinologic and behavioral effects of dietary tryptophan restriction in healthy subjects. Life Sci. 45 (24), 2323-2332.
16 - ANDERSON I.M., PARRY-BILLINGS M., NEWSHOLME E.A., FAIRBURN C.G., COWEN P.J. (1990). Dieting reduces plasma tryptophan and alters brain 5-HT function in women. Psychological Medicine 20, 785-791.
17 - GOODWIN G.M., COWEN P.J., FAIRBURN C.G., PARRY-BILLINGS, CALDER P.C., NEWSHOLME E.A. (1990). Plasma concentrations of tryptophan and dieting. Br. Med. J. 300, 1499-1500.
18 - PETERS J.C. (1991). Tryptophan nutrition and metabolism : an overview. Adv. Exp. Med. Biol. 294, 345-358.
19 - YOUNG S.N. (1991). Acute effects of meals on brain tryptophan and serotonin in humans. Adv. Exp. Med. Biol. 294, 417-423.
20 - CHRISTENSEN L., REDIG C. (1993). Effect of meal composition on mood. Behavorial Neuroscience 107 (2), 346-353.
21 - WALSH A.E.S., OLDMAN A.D., FRANKLIN M., FAIRBURN C.G., COWEN P.J. (1995). Dieting decreases plasma tryptophan and increases the prolactin response to d-fenfluramine in women but not men. J. Affect. Dis. 33, 89-97.
22 - WOLFE B. E., METZGER E.D., JIMERSON D.C. (1995). Comparison of the effects of amino acid mixture and placebo on plasma tryptophan to large neutral amino acid ratio. Life Sci. 56 (17), 1395-140.
23 - YOUNG S.N., CHOUINARD G., ANNABLE L. (1981). Tryptophan in the treatment of depression. Adv. Exp. Med. Biol. 133, 727-737.
24 - ELLRODT A. (1989). Les pulsions alimentaires. Information Diététique 1, 3-11.
25 - ROSENTHAL N.E., GENHART M.J., CABALLERO B., JACOBSEN F. M., SKWERER R.G., COURSEY R.D., ROGERS S., SPRING B.J. (1989). Psychobiological effects of carbohydrate- and protein-rich meals in patients with seasonal affective disorder and normal controls. Biol. Psychiatry 25, 1029-1040.
26 - KRAUCHI K., WIRZ-JUSTICE A., GRAW P. (1990). The relationship of affective state to dietary preference : winter depression and light therapy as a model. J. Affect. Dis. 20, 43-53.
27 - MAES M., VANDEWOUDE M., SCHOTTE C., MARTIN M., DíHONDT P., SCHARPE S., BLOCKX P. (1990). The decreased availability of L-tryptophan in depressed females : clinical and biological correlates. Prog. Neuropsychopharmacol. Biol. Psychiatry 14, 903-919.
28 - RUSS M.J., ACKERMAN S.H., BANAY-SCHWARTZ M., SHINDLEDECKER R.D., SMITH G.P. (1990). Plasma tryptophan to large neutral amino acid ratios in depressed and normal subjects. J. Affect. Dis. 19, 9-14.
29 - SPRING B., PINGITORE R., KESSLER K. (1992). Strategies to minimize weight gain after smoking cessation : psychological and pharmacological intervention with specific reference to dexfenfluramine. Inter. J. Obesity 16 (suppl. 3), 19-23.
30 - HENINGER G.R., DELGADO P.L., CHARNEY D.S., PRICE L.H., AGHAJANIAN G.K. (1992). Tryptophan-deficient diet and amino acid drink deplete plasma tryptophan and induce a relapse of depression in susceptible patients. J. Chem. Neuroanat. 5, 347-348.
31 - LUCCA A., LUCINI V., PIATTI E., RONCHI P., SMERALDI E. (1992). Plasma tryptophan levels and plasma tryptophan/neutral amino acids ratio in patients with mood disorder, patients with obsessive-compulsive disorder, and normal subjects. Psychiatry Res. 44, 85-91.
32 - BENKELFAT C., ELLENBOGEN M.A., DEAN P., PALMOUR R.M., YOUNG S.Y. (1994). Mood-Lowering effect of tryptophan depletion. Enhanced susceptibility in young men at genetic risk for major affective disorders. Arch. Gen. Psychiatry 51 (9), 687-697.
33 - OLDMAN A., WALSH A, SALKOVSKIS P., FAIRBURN C.G., COWEN P.J. (1995). Biochemical and behavioural effects of acute tryptophan depletion in abstinent bulimic subjects : a pilot study. Psychological Medicine 25, 995-1001.
34 - BREWERTON T.D. (1995). Toward a unified theory of serotonin dysregulation in eating and related disorders. Psychoneuroendocrinology 20 (6), 561-590.
35 - WELTZIN T.E. (1995). Acute tryptophan depletion and increased food intake and irritability in bulimia nervosa. Am. J. Psychiatry 152 (11), 1668-1671.
36 - MAES M., SCHARPE S., VERKERK R., DíHONDT P., PEETERS D., COSYNS P., THOMPSON P., DE MEYER F., WAUTERS A., NEELS H. (1995). Seasonal variation in plasma L-iTryptophan availability in healthy volunteers. Relationships to violent suicide occurrence. Arch. Gen. Psychiatry 52 (11), 937-946.
37 - LAM R.W., ZIS A.P., GREWAL A., DELGADO P.L., CHARNEY D.S., KRYSTAL J.H. (1996). Effects of rapid tryptophan depletion in patients with seasonal affective disorder in remission after light therapy. Arch. Gen. Psychiatry 53, 41-44.
38 - McDOUGLE C. J., NAYLOR S. T., COHEN D. J., VOLKMAR F. R., HENINGER G. R., PRICE L. H. (1996). A double-blind, placebo-controlled study of Fluvoxamine( in adults with autistic disorder. Arch. Gen. Psychiatry 53 (11), 1001-1008.
39 - McDOUGLE C. J., NAYLOR S. T., COHEN D. J., AGHAJANIAN G. K., HENINGER G. R., PRICE L. H. (1996). Effects of tryptophan depletion in drug-free adults with autistic disorder. Arch. Gen. Psychiatry 53 (11), 993-1000.
40 - HALBREICH U., ENDICOTT J., LESSER J. (1985). The clinical diagnosis and classification of premenstrual changes. Can. J. Psychiatry 30 (7), 489-497.
41 - ROY-BYRNE P.P., HOBAN C., RUBINOW D.R. (1987). The relationship of menstrually related mood disorders to psychiatric disorders. Clin. Obstet. Gynecol., 30 (2), 386-395.
42 - RAPKIN A.J., EDELMUTH E., CHANG L.C., READING A. E., McGUIRE M.T., TUNG-PING SU (1987). Whole-blood serotonin in premenstrual syndrome. Obstet. Gynecol. 70 (4), 533-537.
43 - WURTMAN J.J., BRZEZINSKI A., WURTMAN R.J., LAFERRERE B. (1989). Effect of nutrient intake on premenstrual depression. Am. J. Obstet. Gynecol. 161 (5), 1228-1234.
44 - BRZEZINSKI A.A., WURTMAN J.J., WURTMAN R.J., GLEASON R., GREENFIELD J., NADER T. (1990). d-Fenfluramine suppresses the increased calorie and carbohydrate intakes and improves the mood of women with premenstrual dépression. Obstet. Gynecol. 76 (2), 296-301.
45 - STONE A.B., PEARLSTEIN T.B., BROWN W.A. (1991). Fluoxetine in the treatment of late luteal phase dysphoric disorder. J. Clin. Psychiatry 52, 290-293.
46 - MENKES D.B., TAGHAVI E., MASON P.A., SPEARS G.F.S., HOWARD R.C. (1992). Fluoxetine treatment of severe premenstrual syndrome. Br. Med. J. 305, 346-347.
47 - SUNDBLAD C., MODIGH K., ANDERSCH B., ERIKSSON E. (1992). Clomipramine effectively reduces premenstrual irritability and dysphoria : a placebo-controlled trial. Acta. Psychiatry Scand. 85, 39-47.
48 - MENKES D.B., COATES D.C., FAWCETT JP. (1994). Acute tryptophan depletion aggravates premenstrual syndrome. J. Affect. Dis. 32, 37-44.
49 - CHRISTENSEN L.(1997). The effect of carbohydrates on affect. Nutrition 13, (6), 503-514.

## Revendications

1. Composition alimentaire constituée d'une fraction protéique, d'une fraction glucidique, d'une fraction minérale et/ou vitaminique, et d'une fraction lipidique, **caractérisée en ce que** ladite fraction protéique est constituée par des protéines de lactosérum dont le ratio Trp/AAn est compris entre 0,06 et 0,08.

2. Composition alimentaire selon la revendication 1, **caractérisée en ce qu'**elle se présente sous la forme d'une formulation sèche ou liquide, telle que des soupes déshydratées, des crèmes dessert aromatisées, des laits sans caséine, des barres chocolatées ou des biscuits.

3. Utilisation d'une composition alimentaire selon l'une quelconque des revendications 1 ou 2, pour la préparation d'un produit diététique destiné à augmenter le rapport Trp/AAN plasmatique chez un individu présentant un déficit en sérotonine cérébrale.

4. Utilisation d'une composition alimentaire selon l'une quelconque des revendications 1 ou 2, pour la préparation d'un produit diététique destiné à augmenter le taux de sérotonine cérébrale chez un sujet présentant un déficit en cette substance.

5. Utilisation d'une composition alimentaire selon l'une quelconque des revendications 1 ou 2, pour la préparation d'un produit diététique destiné au traitement de la boulimie, de l'instabilité, de l'anxiété, des états dépressifs, des syndromes prémenstruels, de l'irritabilité et des troubles du sommeil.

## Claims

1. Food composition consisting of a protein fraction, of a carbohydrate fraction, of a mineral and/or vitamin fraction and of a lipid fraction, **characterized in that** said protein fraction consists of lactoserum proteins for which the Trp/NAA ratio is between 0.06 and 0.08.

2. Food composition according to Claim 1, **characterized in that** it is in the form of a dry or liquid formulation, such as dehydrated soups, flavoured dessert creams, casein-free milks, chocolate bars or biscuits.

3. Use of a food composition according to either one of Claims 1 and 2, for preparing a dietetic product intended to increase the plasma Trp/NAA ratio in an individual exhibiting a cerebral serotonin deficiency.

4. Use of a food composition according to either one of Claims 1 and 2, for preparing a dietetic product intended to increase the cerebral serotonin level in an individual exhibiting a deficiency in this substance.

5. Use of a food composition according to either one of Claims 1 and 2, for preparing a dietetic product intended for the treatment of bulimia, instability, anxiety, depressive states, premenstrual syndromes, irritability and sleep disorders.

## Patentansprüche

1. Lebensmittelzubereitung, bestehend aus einem Proteinanteil, einem Kohlenhydratanteil, einem Mineral- und/oder Vitaminanteil und einem Fettanteil, **dadurch gekennzeichnet, dass** der Proteinanteil aus Milchserumproteinen besteht, deren Verhältnis Trp/nAs zwischen 0,06 und 0,08 einschließlich liegt.

2. Lebensmittelzubereitung nach Anspruch 1, **dadurch gekennzeichnet, dass** sie in Form einer trockenen oder flüssigen Formulierung, wie von entwässerten Suppen, mit Aroma versehenen Dessertcremes, Milchprodukten ohne Casein, Schokoladeriegeln oder Keksen vorliegt.

3. Verwendung einer Lebensmittelzubereitung nach irgendeinem der Ansprüche 1 oder 2 für die Herstellung eines Diätprodukts, das zur Erhöhung des Plasmaverhältnisses Trp/nAs bei einem Individuum bestimmt ist, das einen Mangel an zerebralem Serotonin aufweist.

4. Verwendung einer Lebensmittelzubereitung nach irgendeinem der Ansprüche 1 oder 2 für die Herstellung eines Diätprodukts, das dazu bestimmt ist, den zerebralen Serotoningehalt bei einem Subjekt zu steigern, das einen Mangel an dieser Substanz aufweiset.

5. Verwendung einer Lebensmittelzubereitung nach irgendeinem der Ansprüche 1 oder 2 für die Herstellung eines Diätprodukts, das zur Behandlung von Bulimie, Labilität, Angst, depressiven Zuständen, prämenstruellen Syndromen, Reizbarkeit und Schlafstörungen bestimmt ist.
